# EUROPEAN PATENT SPECIFICATION

(11) **EP 1 804 224 B1**
(45) Date of publication and mention of the grant of the patent: **29.06.2011**
(21) Application number: 06125700.2
(22) Date of filing: 08.12.2006
(51) Int. Cl.: G08G 1/0962, G08G 1/0967

(54) **Traffic Information Display Method and Apparatus**
Verfahren und Vorrichtung zur Anzeige von Verkehrsinformation
Procédé et appareil d'affichage d'informations de trafic

(30) Priority: 02.01.2006 KR 20060000202
(43) Date of publication of application: 04.07.2007
(73) Proprietor: Samsung Electronics Co., Ltd., Suwon-si, Gyeonggi-Do (KR)
(72) Inventor: KIM, Jong Hyun, Suwon-si Gyeonggi-do (KR); KIM, Jin Won, Seocho-gu, Seoul (KR); KIM, Kwang Soo, Seoul (KR); MIN, Hyun Suk, Gyeonggi-do (KR); JUNG, Suk In, Seoul (KR); YANG, Hye Jung, Busan (KR); YANG, Sung Chul, Gyeonggi-do (KR)
(74) Representative: Grünecker, Kinkeldey, Stockmair & Schwanhäusser Anwaltssozietät

(56) References cited:
- WO-A-99/14701
- SAMMO CHO,YOUNGHO JEONG GEON,HYUCKJAE LEE,AHN CHUNG HYUN,SOO IN LEE: "An efficient transmission of traffic and traveller information using digital multimedia broadcasting network" VEHICULAR TECHNOLOGY CONFERENCE , 2005, ISBN 10903038, vol. 4, 25 September 2005 (2005-09-25), - 28 September 2005 (2005-09-28) pages 2749-2752, XP002491205

## Description

The present invention relates generally to a traffic information display method and apparatus and, more particularly, to a traffic information display method and apparatus wherein traffic information is displayed at user selectable levels.

In recent years, a steady growth of automobiles being driven on highways has caused serious traffic congestion and an increase in traffic accidents. As a result, there have been various schemes developed to provide drivers with real time traffic information regarding road traffic conditions, accidents and the like.

In providing real time traffic information, the traffic information may be announced by traffic reporters during delivery of FM broadcasting services, transmitted through some parts of FM data channels for FM broadcasting services , provided as a type of added service of mobile communication companies, and provided using a digital multimedia broadcasting (DMB) service.

In the DMB service, real-time traffic information is provided as Transport Protocol Experts Group (TPEG) data coded in a format defined by TPEG protocols, which are new standards for delivering traffic and travel information. That is, TPEG data containing real-time traffic information is inserted into a data area of DMB data, and the DMB data is broadcast. Hence, the real-time traffic information can be provided to many unspecified DMB users.

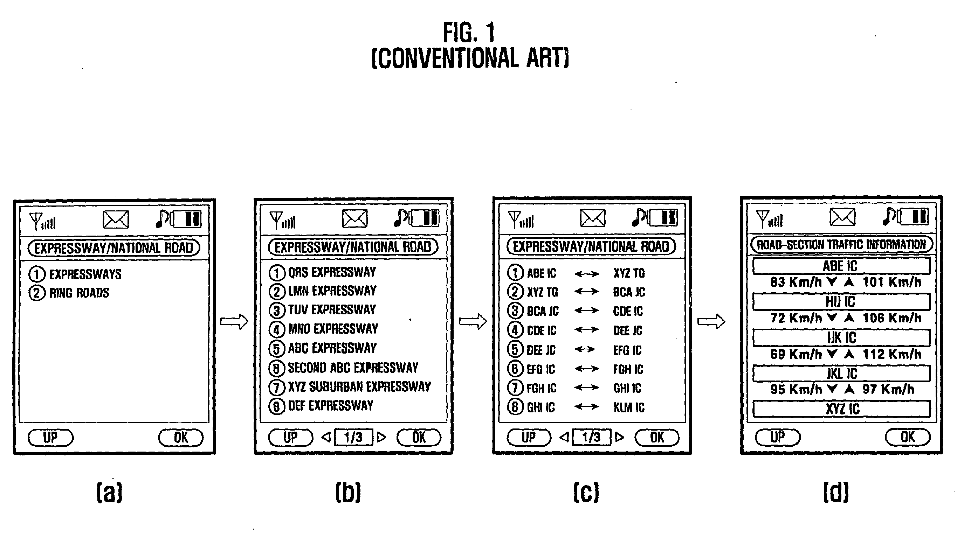

FIG. 1 illustrates a conventional procedure to display traffic information using a mobile communication terminal. Traffic information is displayed in order from FIG. 1 a to FIG. 1 d. The user must pass through multiple levels to determine the travel speed at a desired section of a road. For example, to determine the travel speed on unit road- sections between ABC Interchange and XYZ Tollgate along the QRS Expressway, the user must pass through multiple levels as shown in FIGS. 1 a to 1 d.

This occurs because, in such a conventional traffic information display method, travel speed information is displayed only at the lowest level corresponding to unit road-sections. Hence, the user must move down to the lowest level corresponding to unit road-sections of the desired road, thereby causing user inconvenience.

Sammo Cho, Youngho Jeong Geon, Hyuckjae Lee, Ahn Chung Hyun, Soo in Lee: "An efficient transmission of traffic and traveler information using digital multimedia broadcasting network", Vehicular Technology Conference, 2005, ISBN 10903038, vol. 4, 25-28 September 2005, pages 2749 to 2752, relates to efficient transmission of traffic and traveler information using a digital multimedia broadcasting (DMB) network. It describes the result of the trial implementation of the Transport Protocol Expert Group (TPEG) service protocol in a Korean DMB network. A navigation example is shown with a TPEG message from the TPEG receiver and its combination with the digital map installed in the receiver.

WO 99/14701 A relates to a navigation system with user definable cost values. The navigation system includes a database of road segments and a cost associated with the road segments, such as estimated time or travel across that road segment and estimated length of travel across that road segment. By selecting to edit congested roads, the user can delete items from or add items to the congested road list, or edit the congestion levels. The user sets the congestion level, preferably selected from at least three levels and most preferably 14 levels, with a congestion value between 1.0 for no known congestion to 10,000 for almost absolute avoidance.

The present invention has been developed in view of the above problems. It is the object of the present invention to provide a traffic information display method and apparatus wherein traffic information is presented to the user in a convenient manner.

This object is solved by the subject matter of the independent claims.

Preferred embodiments are defined in the dependent claims.

An aspect of the present invention is to provide a traffic information display method and apparatus wherein traffic information can be presented at higher levels than unit road-sections, the unit road-sections being minimum units of traffic information display.

Another aspect of the present invention is to provide a traffic information display method and apparatus wherein traffic information can be displayed at user selectable levels.

In accordance with the present invention, there is provided a traffic information display method including creating, in response to a traffic information display request from a user, the highest-level traffic information selection menu among traffic information categorized in multiple levels, and displaying the created traffic information selection menu; creating, in response to a selection of information of a user, a low-level traffic information selection menu including associated travel speed data, and displaying the created low-level traffic information selection menu, and repeating the step of creating a low-level menu until the lowest-level menu is displayed.

Preferably, the step of creating a low-level menu includes finding records storing selected current-level traffic information, sorting the records having the same field values storing traffic information that is lower in level than the selected current-level traffic information into the same low-level traffic information group, deriving travel speed data for all of the low-level traffic information using travel speed data on a unit road-section corresponding to records that are sorted as the same low-level traffic information group, and displaying the low-level traffic information and associated travel speed data list.

In accordance with the present invention, there is provided a traffic information display apparatus including a display; a receiver for receiving Transport Protocol Experts Group (TPEG) data containing real-time traffic information; a speed information database for managing travel speed data of unit road-sections, the unit road-sections being minimum units for traffic information display; a traffic information selection menu generator for creating low-level traffic information selection menus including associated travel speed data derived using the speed information database; and a controller for controlling, in response to a traffic information display request from a user, the traffic information selection menu generator to create a low-level traffic information selection menu containing associated travel speed data for selecting traffic information that is lower in level than current-level traffic information being displayed.

Preferably, the speed information database includes a large group name field storing information on a large group including the highest-level traffic information among traffic information categorized in multiple levels; a medium group name field storing one of a plurality of medium group names contained in the large group stored in the large group name field; a small group name field storing one of a plurality of small group names contained in the medium group stored in the medium group name field; a unit road-section name storing one of a plurality of unit road-section names contained in the small group stored in the small group name field; a travel speed field storing real-time travel speed data of the unit road-section stored in the unit road-section field; and a section length field storing the length of the unit road-section.

The traffic information selection menu generator finds records storing selected current-level traffic information, sorts the records having the same field values and storing traffic information that is lower in level than the selected current-level traffic information, into the same low-level traffic information group, deriving travel speed data for each low-level traffic information using travel speed data on a unit road-section corresponding to records that are sorted as the same low-level traffic information group, and displays the low-level traffic information and associated travel speed data list.

The traffic information display apparatus may be a mobile communication terminal.

The present invention will be more clearly understood from the following detailed description taken in conjunction with the accompanying drawings, in which:
FIG. 1 is a series of display screens illustrating a conventional traffic information display procedure using a mobile communication terminal;
FIG. 2 is a block diagram illustrating the configuration of a mobile communication terminal according to the present invention;
FIG. 3 shows the record structure of a database maintaining road-section travel speed data in the mobile communication terminal of FIG. 2;
FIGS. 4A and 4B are flowcharts illustrating a traffic information display method using the mobile communication terminal of FIG. 2, according to the present invention; and
FIG. 5 is a series of display screen representations illustrating a traffic information display procedure of the method of FIGS. 4A and 4B.

Hereinafter, preferred embodiments of the present invention are described in detail with reference to the accompanying drawings. The same reference symbols identify the same or corresponding elements in the drawings. Some constructions or processes known in the art are not described for the sake of clarity and conciseness.

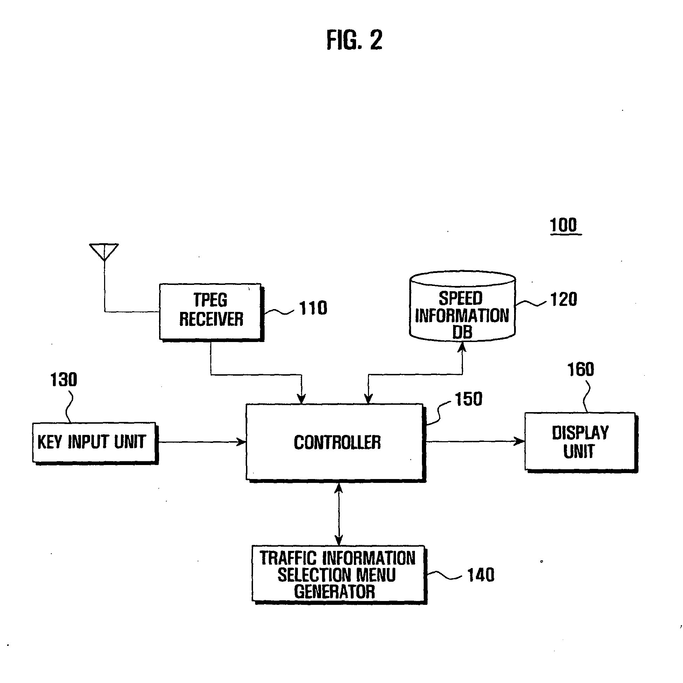

FIG. 2 is a schematic block diagram illustrating the configuration of a mobile communication terminal according to the present invention. Referring to FIG. 2, the mobile communication terminal 100 comprises a TPEG receiver 110, a speed information database (DB) 120, a key input unit 130, a traffic information selection menu generator 140, a controller 150 and a display unit 160.

The TPEG receiver 110 receives TPEG data including real-time traffic information. The TPEG receiver 110 preferably receives DMB data from a data network such as a DMB network and detects TPEG data in the received DMB data.

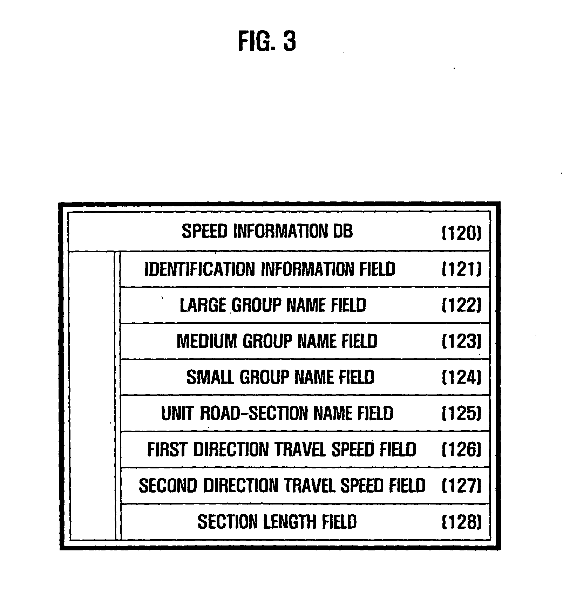

The speed information DB 120 stores travel speed data on unit road-sections. In this invention, a unit road-section is the minimum unit of traffic information display. The speed information DB 120 preferably stores unit road-section travel speed data that is extracted from TPEG data received by the TPEG receiver 110 and transmitted by the controller 150. The controller 150 preferably detects real-time traffic information in the TPEG data received by the TPEG receiver 110, extracts unit road-section travel speed data from the detected real-time traffic information, and controls the speed information DB 120 to store the extracted unit road-section travel speed data. The speed information DB 120 categorizes a road-section into several groups in multiple levels based on a unit road-section and stores information on the groups together with group identification information. For example, one or more unit road-sections are categorized as a small group, one or more small groups are categorized as a medium group and one or more medium groups are categorized as a large group. The speed information DB 120 preferably stores identification information on the small group, medium group and large group, to which an individual unit road-section belongs, together with travel speed data on the unit road-section. A record structure of the speed information DB 120 is shown in FIG. 3, and is described later in relation to FIG. 3.

The key input unit 130 provides a user interface for inputting commands to control the operation of the mobile communication terminal 100. The key input unit 130 preferably inputs a user command for determining traffic information, and transmits the inputted user command to the controller 150. For example, the key input unit 130 preferably receives input of a user's operation signal for sequentially selecting groups from a high level group to a low level group (for example, selection of a large group→ selection of a medium group→selection of a small group → selection of a unit road-section) to determine traffic information on a desired area or road, and transmits the inputted operation signal to the controller 150. The traffic information selection menu generator 140 creates traffic information selection menus in response to user input commands requesting traffic information. The traffic information selection menu generator 140 preferably creates a traffic information selection menu regarding a low-level traffic information subordinate to selected current-level traffic information being displayed. The traffic information selection menu generator 140 creates a traffic information selection menu including travel speed data of an associated traffic level. For example, when a large group includes road classification information (for example, national road and expressway) and wide region information (for example, Z city and aY State); a medium group, which is lower in level than the large group, includes types of roads (for example, national road name and expressway name); and a small group, which is lower in level than the medium group, includes a high-level road-section including a plurality of unit road-sections along an individual road. If a user selects the name of a specific expressway in the state that names of expressways corresponding to the medium group are being displayed, the traffic information selection menu generator 140 creates a traffic information selection menu for selecting a small group (for example, high-level road-sections described above, which are lower in level than an expressway) on the expressway, and creates a traffic information selection menu containing individual travel speed data (for example, average travel speed or lowest travel speed) of small groups( for example, high-level road-sections described above). For this purpose, the traffic information selection menu generator 140 preferably retrieves, from the speed information DB 120, travel speed data of unit road-sections included in a small group to calculate travel speed data of the associated small group.

The controller 150 controls the operation of the mobile communication terminal 100 on the basis of user commands inputted through the key input unit 130 and pre-stored executable programs. In particular, when the mobile communication terminal 100 operates in a DMB reception mode, the controller 150 controls reception of TPEG data through the TPEG receiver 110.

The controller 150 also controls the operation of the traffic information selection menu generator 140 in response to user commands requesting traffic information. For example, when a traffic information request is input through the key input unit 130, the controller 150 controls the traffic information selection menu generator 140 to create a menu for selecting traffic information, and controls display of the created menu on the display unit 160. The controller 150 preferably stores menu structure information for providing traffic information. For example, the controller 150 pre-stores level classification information for providing traffic information, and controls generation of traffic information selection menus using the pre-stored level classification information in response to user input commands requesting traffic information.

The level classification information is a menu structure classified as a large group, a medium group or a small group. That is, the medium group is lower in level than the large group and is higher in level than the small group.

The display unit 160 displays a visual signal under the control of the controller 150. The display unit 160 preferably displays a traffic information selection menu having travel speed data, created by the traffic information selection menu generator 140.

FIG. 3 shows a record structure of the speed information DB 120 maintaining road-section travel speed data in the mobile communication terminal 100. Referring to FIG. 3, in data records in the speed information DB 120, unit road-sections are grouped in multiple levels and identification information of the multi-level groups is stored. The speed information DB 120 has an identification information field 121, a large group name field 122, a medium group name field 123, a small group name field 124, a unit road-section name field 125, a first direction travel speed field 126, a second direction travel speed field 127, and a section length field 128.

The identification information field 121 may be used to store identification information to identify a corresponding unit road-section. For example, travel speed of "Thruway", which is one of the unit road-sections of QRS Expressway, is stored in a corresponding record, and information for identifying "Thruway"( for example a code) is stored in the identification information field 121.

The large group name field 122 may be used to store the name of a large group including a corresponding unit road-section. Road classification information is stored in the large group name field 122. For example, to store travel speed data of a unit road-section "Thruway" on QRS Expressway in a particular data record, "Expressway" is stored in the large group name field 122.

The medium group name field 123 may be used to store the names of roads classified as the medium group roads that are lower in level than the large group roads. The names of roads classified as the large group are stored in the medium group name field 123. For example, to store travel speed data of the unit road-section "Thruway" on QRS Expressway in a particular data record, "QRS Expressway" is stored in the medium group name field 123.

The small group name field 124 may be used to store the names of roads classified as the small group roads that are lower in level than the medium group roads. The names of high-level road-sections, including several unit road-sections constituting a road classified as the medium group, are stored in the small group name field 124. For example, the name of a high-level road-section including the unit road-section "Thruway" is stored in the small group name field 124.

The unit road-section name field 125 may be used to store the names of unit road-sections for which traffic speed is stored in a corresponding record data. For example, "Thruway" is stored in the case of the above example.

The first direction travel speed field 126, the second direction travel speed field 127 and section length field 128 may be used to store travel speed in a first direction (e.g., north), travel speed in a second direction (e.g., south) and length, respectively, at a unit road-section stored in the unit road-section name field 125. For example, if "Thruway" is stored in the unit road-section name field 125, northerly direction travel speed of the unit road-section "Thruway" is stored in the first direction travel speed field 126, southerly direction travel speed of the unit road-section "Thruway" is stored in the second direction speed field 127, and the length of the unit road-section "Thruway" is stored in the section length field 128.

As described above, the speed information DB 120 preferably stores and manages both travel speed data and associated classification information of unit road-sections.

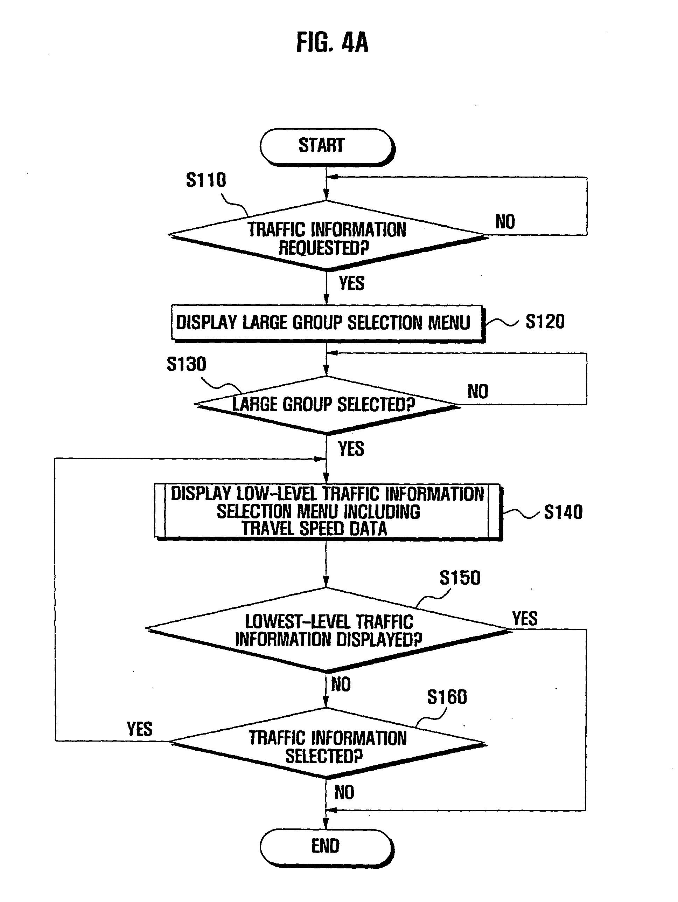

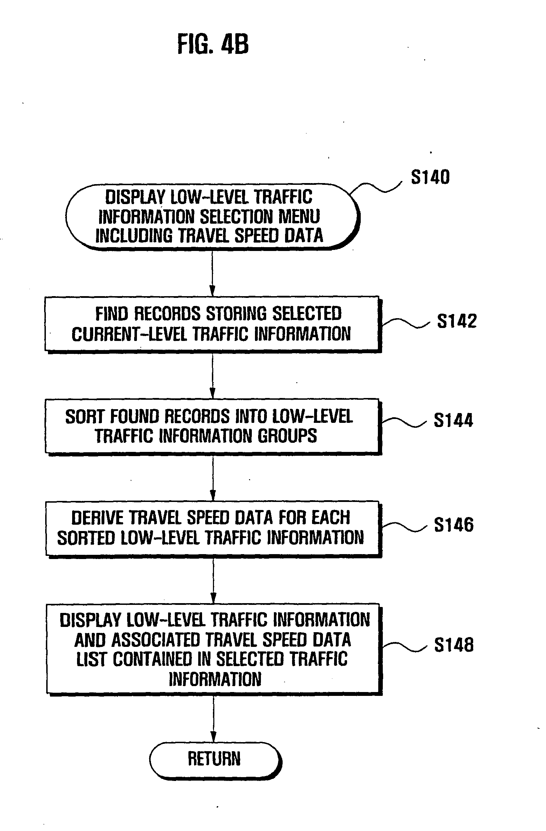

The flowcharts in FIGS. 4A and 4B illustrate a procedure to display traffic information including associated travel speed data at a user selectable level using the mobile communication terminal 100 described in relation to FIGS. 2 and 3.

Referring to FIGS. 2, 3 and 4A, when the user inputs a command requesting traffic information through the key input unit 130 (S110), the controller 150 controls the traffic information selection menu generator 140 to display a large group (for example, traffic information included in the highest level) selection menu on the display unit 160 (S120). The controller 150 preferably pre-stores menu structure information for providing traffic information. For example, the controller 150 pre-stores level classification information for providing traffic information, and creates traffic information selection menus in response to user commands according to the level classification information. The level classification information is a menu structure classified as a large group, medium group or small group. That is, the medium group is lower in level than the large group and is higher in level than the small group.

In step S120, the large group selection menu preferably includes information on a wide region (for example Z City, QRS Expressway, Y State) or a road classification.

If the user selects one of the large groups listed in the large group selection menu displayed at step S120 (S130), the controller 150 transmits the selected large group information to the traffic information selection menu generator 140. The controller 150 preferably transmits the selected large group information to the traffic information selection menu generator 140.

The traffic information selection menu generator 140 generates a low-level traffic information selection menu having travel speed data using the selected large group information, and displays the generated low-level selection menu on the display unit 160 (S140). The traffic information selection menu generator 140 computes travel speed data for traffic information in the medium group, and displays both the traffic information and computed travel speed data. If computing of travel speed data for traffic information in the low level is not possible, the computing procedure of the travel speed data is omitted. A detailed procedure for generation of a low-level traffic information selection menu at step S140 is illustrated in FIG. 4B, and is described later in relation to FIG. 4B.

Whether the traffic information displayed at step S140, that is the lowest-level traffic information is identified (step 150), and if the displayed traffic information is the lowest- level traffic information, the processing procedure of the traffic information is ended. If the traffic information displayed at step 150 is not the lowest-level traffic information, steps from S140 are repeated in response to traffic information selection (S 160) for the displayed traffic information.

FIG. 4B illustrates a detailed procedure to display a low-level traffic information selection menu corresponding to step S140 in FIG. 4A. Referring to FIGS. 2, 3, 4A and 4B, the controller 150 finds, from the speed information DB 120, records storing large group information selected at the previous step S130 or current-level traffic information selected at step S160 (S142). For example, the controller 150 may find records having a large group name field value that is equal to that of the large group selected at step 130, from the speed information DB 120.

Next, the controller (150) sorts the records into low-level traffic information groups (S144). That is, the controller (150) may sort the records by a field value storing traffic information that is lower in level than current-level traffic information. For example, if the current level is "a large group", the records are sorted by a "medium group name field" value storing traffic information corresponding to the medium group that is lower in level than the large group. That is, records having the same medium group name field are sorted as the same group.

Travel speed data of low-level traffic information group sorted in step S144 is calculated in step S146. That is, the controller (150) calculates travel speed data of low-level traffic information group using travel speed data on a unit road-section corresponding to records included in the low-level traffic information group. The low-level traffic information and associated travel speed data list are displayed (S148).

For example, when "expressway" is selected as a large group at step S130 in FIG. 4A, records having "expressway" as a value stored in a large group name field 122 are searched from the speed information DB 120 at step S142. At step S144, the searched records are then sorted into groups of records having the same value stored in the medium group name fields 123. For example, data having values stored in the medium group name field 123 as 'QRS Expressway', 'TUV Expressway' and 'MNO Expressway' is sorted. That is, records having the same value stored in the medium group name field 123 are sorted as the same low-level traffic information.

At step S146, for each sorted low-level traffic information, associated travel speed data is calculated. For example, northerly/southerly direction travel speed data is associated with the "QRS Expressway" is calculated using values stored in the first and second travel speed fields 126 and 127 of records having "QRS Expressway" as a value stored in the medium group name field 123.

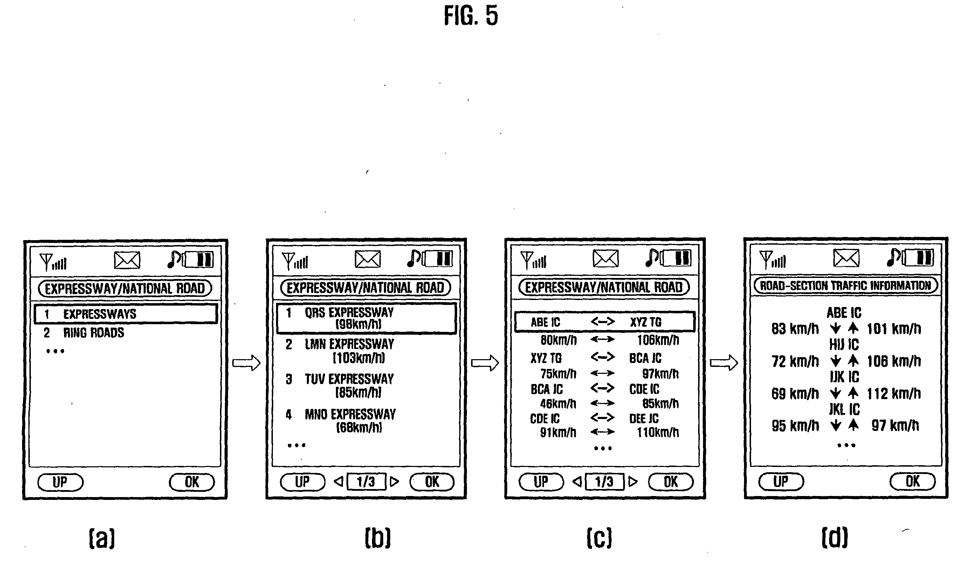

FIG. 5 shows screen representations of the mobile communication terminal, wherein traffic information selection menus and traffic information are displayed according to a user's traffic information selection levels. FIG. 5A shows large group selection menus for selecting a large group. FIG. 5B shows selectable low-level traffic information menus in response to a selection of "expressway" as a large group in FIG. 5A. FIG. 5C shows selectable low-level traffic information menus in response to a selection of "QRS Expressway" in FIG. 5B. FIG. 5D shows traffic information on unit road-sections contained in the high-level road-section in the case that a high-level road-section representing 'Thruway' is selected in FIG. 5C. Referring to FIGS. 5B and 5C, associated travel speed data is displayed in road name selection menus and high-level road-section selection menus.

As apparent from the above description, the present invention provides a traffic information display method and apparatus wherein associated travel speed data on road-sections are displayed for high-level road-sections of unit road-sections that are minimum units for displaying traffic information. As a result, the user can determine traffic information in a more convenient manner.

This disclosure is not intended to limit the scope of the invention, but to serve only for illustrative purposes. It should be understood by the ordinary person skilled in the art that various changes or modifications of the embodiments are possible without departing from the scope of the invention. For example, although, in the preferred embodiment, the large group is expressways, the large group is not limited thereto and it may also be national roads or wide regions for displaying traffic situations.

## Claims

1. A traffic information display method, comprising the steps of:
a) receiving Transport Protocol Experts Group, TPEG, data including real-time traffic information;
b) storing travel speed data of unit road-sections from the received TPEG data, the unit road-sections being minimum units of the traffic information display;
c) displaying (S120), in response to a traffic information display request from a user, an initial selection menu of relatively higher-level traffic information among traffic information categorized in multiple levels on a display;
d) receiving one selection of the relatively higher-level traffic information by a user; and
e) displaying (S140), in response to the selection of the relatively higher-level traffic information, a next selection menu of relatively lower-level traffic information including associated travel speed data, wherein the associated travel speed data is derived from the stored travel speed data of unit road-sections.

2. The traffic information display method of claim 1, wherein step e) comprises:
e-1) finding (S142) records storing the selected, relatively higher-level traffic information;
e-2) sorting (S144) the records by field values of the relatively lower-level traffic information;
e-3) deriving (S146) travel speed data from the relatively lower-level traffic information using data on unit road-sections corresponding to the sorted records; and
e-4) displaying (S148) the relatively lower-level traffic information and the derived travel speed data.

3. The traffic information display method of claim 2, wherein the travel speed data for the lower-level traffic information is an average value of the travel speed data of the unit road-sections included in the corresponding lower-level traffic information.

4. The traffic information display method of claim 2, wherein the travel speed data for the lower-level traffic information is the lowest value of travel speed data of the unit road-sections included in the corresponding lower-level traffic information.

5. The traffic information display method of claim 1, wherein step e) displays an average value of travel speed data of unit road-sections included in the corresponding lower-level traffic information.

6. The traffic information display method of claim 1, wherein step e) displays the lowest value of travel speed data of unit road-sections included in the corresponding lower-level traffic information.

7. The traffic information display method of claim 1, wherein the associated travel speed data is calculated from the stored travel speed data.

8. The traffic information display method of claim 1, wherein the associated travel speed data is an average value of the travel speed data of the unit road-sections or the lowest value of travel speed data of the unit road-sections.

9. A traffic information display apparatus, comprising:
a receiver (110) for receiving Transport Protocol Experts Group, TPEG, data including real-time traffic information;
a speed information database (120) for storing travel speed data of unit road-sections from the received TPEG data and managing the travel speed data of unit road-sections that are minimum units for traffic information display;
a traffic information selection menu generator (140) for creating an initial selection menu of relatively higher-level traffic information, and creating a next selection menu of relatively lower-level traffic information including associated travel speed data wherein the associated travel speed data is derived from the travel speed data of the unit road sections;
a controller (150) for controlling the traffic information selection menu generator to respectively create the relatively higher-level traffic information and the relatively lower-level traffic information; and
a display (160) for displaying successively, upon selection by the user, the created higher-level traffic selection menu and then the created next selection menu together with the associated travel speed data.

10. The traffic information display apparatus of claim 9, wherein the receiver receives digital multimedia broadcasting, DMB, data including the TPEG data from a DMB network, and detects the TPEG data in the received DMB data.

11. The traffic information display apparatus of claim 9, wherein the speed information database includes:
a large group name field (122) storing information on a large group including a highest-level traffic information among traffic information categorized in multiple levels;
a medium group name field (123) storing one of a plurality of medium group names included in the large group stored in the large group name field;
a small group name field (124) storing one of a plurality of small group names included in the medium group stored in the medium group name field;
a unit road-section name field (125) storing one of a plurality of unit road-section names included in the small group stored in the small group name field;
a travel speed field (126, 127) storing real-time travel speed data of the unit road-section stored in the unit road-section field; and
a section length field (128) storing a length of the unit road-section.

12. The traffic information display apparatus of claim 11, wherein the travel speed field is used to store travel speed data of two opposing traffic flows.

13. The traffic information display apparatus of claim 9, wherein the traffic information selection menu generator finds records storing the selected, relatively higher-level traffic information, sorts the records by field values of the relatively lower-level traffic information, derives the travel speed data from the relatively lower-level traffic information using data on unit road-sections corresponding to the sorted records, and displays the relatively lower-level traffic information and the derived travel speed data.

14. The traffic information display apparatus of claim 13, wherein the controller stores menu structure information for providing traffic information, and controls the traffic information selection menu generator using the stored menu structure information.

15. The traffic information display apparatus of claim 9, wherein the traffic information display apparatus is a mobile communication terminal.

## Patentansprüche

1. Verfahren zum Anzeigen von Verkehrsinformationen, das die folgenden Schritte umfasst:
a) Empfangen von TPEG-Daten (Transport Protocol Experts Group data), die Echtzeit-Verkehrsinformationen enthalten;
b) Speichern von Fahrgeschwindigkeits-Daten von Einzel-Straßenabschnitten aus den empfangenen TPEG-Daten, wobei die Einzel-Straßenabschnitte minimale Einheiten der Anzeige von Verkehrsinformationen sind;
c) Anzeigen (S120) eines Anfangs-Auswahlmenüs von Verkehrsinformationen einer vergleichsweise höheren Stufe von Verkehrsinformationen, die in mehrere Stufen kategorisiert sind, auf einer Anzeigeeinrichtung in Reaktion auf eine Anforderung zum Anzeigen von Verkehrsinformationen von einem Benutzer;
d) Empfangen einer Auswahl der Verkehrsinformationen der vergleichsweise höheren Stufe von einem Benutzer; und
e) Anzeigen (S140) eines nächsten Auswahlmenüs von Verkehrsinformationen einer vergleichsweise niedrigeren Stufe, die dazugehörige Fahrgeschwindigkeits-Daten einschließen, in Reaktion auf die Auswahl der Verkehrsinformationen der vergleichsweise höheren Stufe, wobei die dazugehörigen Fahrgeschwindigkeits-Daten aus den gespeicherten Fahrgeschwindigkeits-Daten von Einzel-Straßenabschnitten hergeleitet werden.

2. Verfahren zum Anzeigen von Verkehrsinformationen nach Anspruch 1, wobei Schritt e) umfasst:
e-1) Auffinden (S142) von Einträgen, die die ausgewählten Verkehrsinformationen der vergleichsweise höheren Stufe speichern;
e-2) Sortieren (S144) der Einträge nach Feld-Werten der Verkehrsinformationen der vergleichsweise niedrigeren Stufe;
e-3) Herleiten (S146) von Fahrgeschwindigkeits-Daten aus den Verkehrsinformationen der vergleichsweise niedrigeren Stufe unter Verwendung von Daten über Einzel-Straßenabschnitte, die den sortierten Einträgen entsprechen; und
e-4) Anzeigen (S148) der Verkehrsinformationen der vergleichsweise niedrigeren Stufe und der hergeleiteten Fahrgeschwindigkeits-Daten.

3. Verfahren zum Anzeigen von Verkehrsinformationen nach Anspruch 2, wobei die Fahrgeschwindigkeits-Daten für die Verkehrsinformationen der niedrigeren Stufe ein Durchschnittswert der Fahrgeschwindigkeits-Daten der Einzel-Straßenabschnitte sind, die in den entsprechenden Verkehrsinformationen der niedrigeren Stufe enthalten sind.

4. Verfahren zum Anzeigen von Verkehrsinformationen nach Anspruch 2, wobei die Fahrgeschwindigkeits-Daten für die Verkehrsinformationen der niedrigeren Stufe der niedrigste Wert der Fahrgeschwindigkeits-Daten der Einzel-Straßenabschnitte sind, die in den entsprechenden Verkehrsinformationen der niedrigeren Stufe enthalten sind.

5. Verfahren zum Anzeigen von Verkehrsinformationen nach Anspruch 1, wobei Schritt e) einen Durchschnittswert von Fahrgeschwindigkeits-Daten von Einzel-Straßenabschnitten anzeigt, die in den entsprechenden Verkehrsinformationen der niedrigeren Stufe enthalten sind.

6. Verfahren zum Anzeigen von Verkehrsinformationen nach Anspruch 1, wobei Schritt e) den niedrigsten Wert von Fahrgeschwindigkeits-Daten von Einzel-Straßenabschnitten anzeigt, die in den entsprechenden Verkehrsinformationen der niedrigeren Stufe enthalten sind.

7. Verfahren zum Anzeigen von Verkehrsinformationen nach Anspruch 1, wobei die dazugehörigen Fahrgeschwindigkeits-Daten aus den gespeicherten Fahrgeschwindigkeits-Daten berechnet werden.

8. Verfahren zum Anzeigen von Verkehrsinformationen nach Anspruch 1, wobei die dazugehörigen Fahrgeschwindigkeits-Daten ein Durchschnittswert der Fahrgeschwindigkeits-Daten der Einzel-Straßenabschnitte oder der niedrigste Wert der Fahrgeschwindigkeits-Daten der Einzel-Straßenabschnitte sind.

9. Vorrichtung zum Anzeigen von Verkehrsinformationen, die umfasst:
eine Empfangseinrichtung (110) zum Empfangen von TPEG-Daten (Transport Protocol Experts Group data), die Echtzeit-Verkehrsinformationen enthalten;
eine Geschwindigkeitsinformations-Datenbank (120), mit der Fahrgeschwindigkeits-Daten von Einzel-Straßenabschnitten aus den empfangenen TPEG-Daten gespeichert werden
und die Fahrgeschwindigkeits-Daten von Einzel-Straßenabschnitten verwaltet werden, die minimale Einheiten für die Anzeige von Verkehrsinformationen sind;
eine Einrichtung (140) zum Erzeugen von Verkehrsinformations-Auswahlmenüs, mit der ein Anfangs-Auswahlmenü von Verkehrsinformationen einer vergleichsweise höheren Stufe geschaffen wird und ein nächstes Auswahlmenü von Verkehrsinformationen einer vergleichsweise niedrigeren Stufe geschaffen wird, die dazugehörige Fahrgeschwindigkeits-Daten enthalten,
wobei die dazugehörigen Fahrgeschwindigkeits-Daten aus den Fahrgeschwindigkeits-Daten der Einzel-Straßenabschnitte hergeleitet werden;
eine Steuereinrichtung (150), mit der die Einrichtung zum Erzeugen von Verkehrsinformations-Auswahlmenüs so gesteuert wird, dass sie die Verkehrsinformationen der vergleichsweise höheren Stufe bzw. die Verkehrsinformationen der vergleichsweise niedrigeren Stufe erzeugt; und
eine Anzeigeeinrichtung (160), mit der auf Auswahl durch den Benutzer hin nacheinander das geschaffene Verkehrs-Auswahlmenü der höheren Stufe und dann das geschaffene nächste Auswahlmenü zusammen mit den dazugehörigen Fahrgeschwindigkeits-Daten angezeigt werden.

10. Vorrichtung zum Anzeigen von Verkehrsinformationen nach Anspruch 9, wobei die Empfangseinrichtung DMB-Daten (digital multimedia broadcasting data), die die TPEG-Daten enthalten, von einem DMB-Netz empfängt und die TPEG-Daten in den empfangenen DMB-Daten erfasst.

11. Vorrichtung zum Anzeigen von Verkehrsinformationen nach Anspruch 9, wobei die Datenbank für Geschwindigkeitsinformationen enthält:
ein Namensfeld (122) einer großen Gruppe, in dem Informationen über eine große Gruppe gespeichert sind, die Verkehrsinformationen einer höchsten Stufe von Verkehrsinformationen enthält, die in mehreren Stufen kategorisiert sind;
ein Namensfeld (123) einer mittelgroßen Gruppe, in dem eine Vielzahl von Namen einer mittelgroßen Gruppe gespeichert sind, die in der großen Gruppe enthalten ist, die in dem Namensfeld der großen Gruppe gespeichert ist;
ein Namensfeld (124) einer kleinen Gruppe, in dem einer einer Vielzahl von Namen einer kleinen Gruppe gespeichert ist, die in der mittelgroßen Gruppe enthalten ist, die in dem Namensfeld der mittelgroßen Gruppe gespeichert ist;
ein Namensfeld (125) von Einzel-Straßenabschnitten, in dem einer einer Vielzahl von Namen von Einzel-Straßenabschnitten gespeichert ist, die in der kleinen Gruppe enthalten sind, die in dem Namensfeld der kleinen Gruppe gespeichert ist;
ein Fahrgeschwindigkeits-Feld (126, 127), in dem Echtzeit-Fahrgeschwindigkeitsdaten des in dem Feld für Einzel-Straßenabschnitte gespeicherten Einzel-Straßenabschnitts gespeichert sind; und
ein Feld (128) für eine Abschnitts-Länge, in dem eine Länge des Einzel-Straßenabschnitts gespeichert ist.

12. Vorrichtung zum Anzeigen von Verkehrsinformationen nach Anspruch 11, wobei das Fahrgeschwindigkeits-Feld dazu dient, Fahrgeschwindigkeits-Daten zweier entgegengesetzter Verkehrsströme zu speichern.

13. Vorrichtung zum Anzeigen von Verkehrsinformationen nach Anspruch 9, wobei die Einrichtung zum Erzeugen von Verkehrsinformations-Auswahlmenüs Einträge auffindet, die die ausgewählten Verkehrsinformationen der vergleichsweise höheren Stufe speichern, die Einträge nach Feld-Werten der Verkehrsinformationen der vergleichsweise niedrigeren Stufe sortiert, die Verkehrsgeschwindigkeits-Daten aus den Verkehrsinformationen der vergleichsweise niedrigeren Stufe unter Verwendung von Daten über Einzel-Straßenabschnitte herleitet, die den sortierten Einträgen entsprechen, und die Verkehrsinformationen der vergleichsweise niedrigeren Stufe sowie die hergeleiteten Fahrgeschwindigkeits-Daten anzeigt.

14. Vorrichtung zum Anzeigen von Verkehrsinformationen nach Anspruch 13, wobei die Steuereinrichtung Menüstruktur-Informationen zum Bereitstellen von Verkehrsinformationen speichert und die Einrichtung zum Erzeugen von Verkehrsinformations-Auswahlmenüs unter Verwendung der gespeicherten Menüstruktur-Informationen steuert.

15. Vorrichtung zum Anzeigen von Verkehrsinformationen nach Anspruch 9, wobei die Vorrichtung zum Anzeigen von Verkehrsinformationen ein Mobilkommunikations-Endgerät ist.

## Revendications

1. Procédé d'affichage d'informations de trafic comprenant les étapes consistant à :
a) recevoir des données « Groupe d'experts de protocole de transport », TPEG, incluant des informations de trafic en temps réel ;
b) enregistrer des données de vitesse de parcours de sections de route unitaires à partir des données TPEG reçues, les sections de route unitaires étant des unités minimales de l'affichage d'informations de trafic ;
c) afficher (S120), en réponse à une demande d'affichage d'informations de trafic provenant d'un utilisateur, un menu de sélection initiale d'informations de trafic de niveau relativement supérieur parmi les informations de trafic classées dans plusieurs niveaux, sur un affichage ;
d) recevoir une sélection des informations de trafic de niveau relativement supérieur par un utilisateur ;
et
e) afficher (S140), en réponse à la sélection des informations de trafic de niveau relativement supérieur, un menu de sélection suivant d'informations de trafic de niveau relativement inférieur incluant des données de vitesse de parcours associées, dans lequel les données de vitesse de parcours associées sont déterminées d'après les données de vitesse de parcours enregistrées des sections de route unitaires.

2. Procédé d'affichage d'informations de trafic selon la revendication 1, dans lequel l'étape e) comprend :
e-1) la recherche (S142) d'enregistrements contenant les informations de trafic de niveau relativement supérieur sélectionnées ;
e-2) le tri (S144) des enregistrements par valeurs de champ des informations de trafic de niveau relativement inférieur ;
e-3) la détermination (S146) des données de vitesse de parcours d'après les informations de trafic de niveau relativement inférieur en utilisant les données des sections de route correspondant aux enregistrements triés ; et
e-4) l'affichage (S148) des informations de trafic de niveau relativement inférieur et des données de vitesse de parcours déterminées.

3. Procédé d'affichage d'informations de trafic selon la revendication 2, dans lequel les données de vitesse de parcours pour les informations de trafic de niveau inférieur sont constituées de la valeur moyenne des données de vitesse de parcours des sections de route unitaires incluses dans les informations de trafic de niveau inférieur correspondantes.

4. Procédé d'affichage d'informations de trafic selon la revendication 2, dans lequel les données de vitesse de parcours pour les informations de trafic de niveau inférieur sont constituées de la valeur la plus basse des données de vitesse de parcours des sections de route unitaires incluses dans les informations de trafic de niveau inférieur correspondantes.

5. Procédé d'affichage d'informations de trafic selon la revendication 1, dans lequel l'étape e) affiche une valeur moyenne des données de vitesse de parcours des sections de route unitaires incluses dans les informations de trafic de niveau inférieur correspondantes.

6. Procédé d'affichage d'informations de trafic selon la revendication 1, dans lequel l'étape e) affiche la valeur la plus basse des données de vitesse de parcours des sections de route unitaires incluses dans les informations de trafic de niveau inférieur correspondantes.

7. Procédé d'affichage d'informations de trafic selon la revendication 1, dans lequel les données de vitesse de parcours associées sont calculées d'après les données de vitesse de parcours enregistrées.

8. Procédé d'affichage d'informations de trafic selon la revendication 1, dans lequel les données de vitesse de parcours associées sont constituées de la valeur moyenne des données de vitesse de parcours des sections de route unitaires ou de la valeur la plus basse des données de vitesse de parcours des sections de route unitaires.

9. Dispositif d'affichage d'informations de trafic comprenant :
un récepteur (110) pour recevoir des données « Groupe d'experts de protocole de transport », TPEG, incluant des informations de trafic en temps réel ;
une base de données d'informations de vitesse (120) pour enregistrer des données de vitesse de parcours de sections de route unitaires d'après les données TPEG reçues et gérer les données de vitesse de parcours des sections de route unitaires qui sont les unités minimales de l'affichage d'informations de trafic ;
un générateur de menu de sélection d'informations de trafic (140) pour créer un menu de sélection initiale d'informations de trafic de niveau relativement supérieur et pour créer un menu de sélection suivant d'informations de trafic de niveau relativement inférieur incluant des données de vitesse de parcours associées ;
dans lequel les données de vitesse de parcours associées sont déterminées d'après les données de vitesse de parcours des sections de route unitaires ;
un contrôleur (150) pour contrôler le générateur de menu de sélection d'informations de trafic pour créer respectivement les informations de trafic de niveau relativement supérieur et les informations de trafic de niveau relativement inférieur ; et
un dispositif d'affichage (160) pour afficher successivement, lors de la sélection par l'utilisateur, le menu de sélection de trafic de niveau relativement supérieur créé, puis le menu de sélection suivant créé ainsi que les données de vitesse de parcours associées.

10. Dispositif d'affichage d'informations de trafic selon la revendication 9, dans lequel le récepteur reçoit de la radiodiffusion numérique multimédia, DMB, des données incluant les données TPEG d'un réseau de DMB, et détecte les données TPEG dans les données de DMB reçues.

11. Dispositif d'affichage d'informations de trafic selon la revendication 9, dans lequel la base de données d'informations de vitesse comporte :
un nom de champ de grand groupe (122) contenant des informations concernant un grand groupe incluant des informations de trafic de niveau supérieur parmi les informations de trafic classées à des niveaux multiples ;
un nom de champ de groupe moyen (123) contenant un nom parmi une pluralité de noms de groupes moyens inclus dans le grand groupe contenu dans le champ de nom de grand groupe ;
un nom de champ de petit groupe (124) contenant un nom parmi une pluralité de noms de petits groupes inclus dans le groupe moyen contenu dans le champ de nom de groupe moyen ;
un champ de nom de section de route unitaire (125) contenant un nom parmi une pluralité de noms de section de route unitaire inclus dans le petit groupe contenu dans le champ de nom de petit groupe ;
un champ de vitesse de parcours (126, 127) contenant des données de vitesse de parcours en temps réel de la section de route unitaire contenue dans le champ de section de route unitaire ; et
un champ de longueur de section (128) contenant la longueur de la section de route unitaire.

12. Dispositif d'affichage d'informations de trafic selon la revendication 11, dans lequel le champ de vitesse de parcours est utilisé pour enregistrer des données de vitesse de parcours de deux flux de trafic opposés.

13. Dispositif d'affichage d'informations de trafic selon la revendication 9, dans lequel le générateur de menu de sélection d'informations de trafic recherche des enregistrements contenant les informations de trafic de niveau relativement supérieur sélectionnées, trie les enregistrements par valeurs de champ des informations de trafic de niveau relativement inférieur, détermine les données de vitesse de parcours d'après les informations de trafic de niveau relativement inférieur en utilisant les données relatives aux sections de route unitaire correspondant aux enregistrements triés, et affiche les informations de trafic de niveau relativement inférieur et les données de vitesse de parcours déterminées.

14. Dispositif d'affichage d'informations de trafic selon la revendication 13, dans lequel le contrôleur enregistre des informations de structure de menu pour fournir des informations de trafic et contrôle le générateur de menu de sélection d'informations de trafic en utilisant les informations de structure de menu enregistrées.

15. Dispositif d'affichage d'informations de trafic selon la revendication 9, dans lequel le dispositif d'affichage d'informations de trafic est un terminal mobile de communication.
